# EUROPÄISCHE PATENTANMELDUNG

(11) **EP 0 688 653 A1**
(43) Veröffentlichungstag der Anmeldung: **27.12.1995**
(21) Anmeldenummer: 95108583.6
(22) Anmeldetag: 06.06.1995
(51) Int. Cl.: B29C 45/27

(54) **Kaltkanalverteiler**

(30) Priorität: 07.06.1994 DE 4419861
(71) Anmelder: E.O.C. NORMALIEN GmbH & Co. KG., D-58511 Lüdenscheid (DE)
(72) Erfinder: Rapp, Gerhard, D-71691 Freiberg am Neckar (DE)
(74) Vertreter: Hassler, Werner, Dr.

(57) **Zusammenfassung**

Ein Kaltkanalverteiler für ein Spritzgießwerkzeug mit mehreren jeweils einem Formnest zugeordneten Einspritzdüsen und mit innerhalb der Verteilerplatte zu den einzelnen Einspritzdüsen führenden Zufuhrkanälen, wobei jedem Zufuhrkanal eine Drossel zugeordnet ist. Das technische Problem ist eine solche Ausbildung der Drosseln in einem Kaltkanalverteiler, daß dieselben leicht und einzeln einstellbar und zu Wartungszwecken ausbaubar sind. Ein von dem Zufuhrkanal (4) gespeister Kanal (11) in jeder Einspritzdüse (3) mündet radial in eine zylindrische Kammer (12, 121), jede Kammer (12) enthält einen als Drossel dienenden, mit einer in seiner Durchgangsstellung mit dem Kanal (11) fluchtenden Bohrung (23) versehenen, drehbaren Ventilkörper (15, 151), und Durchgänge (22) der Verteilerplatte (1) nehmen in den jeweiligen Ventilkörper (9) eingreifende Verstellelemente (15) auf.

## Beschreibung

Die Erfindung betrifft einen Kaltkanalverteiler für ein Spritzgießwerkzeug mit mehreren jeweils einem Formnest zugeordneten Einspritzdüsen und mit innerhalb der Verteilerplatte zu den einzelnen Einspritzdüsen führenden Zufuhrkanälen, wobei jedem Zufuhrkanal eine Drossel zugeordnet ist.

Die Einspritzdüsen können innerhalb der Verteilerplatte in Reihen, kreisförmig oder in anderer Verteileung mit einem Einspritskanal oder mit Mehrlacheinspritzkanal angeordnet sein. Die Drossel dient zur Bilanzierung der Masse für die Formnester. Die Drossel kann als Blende, Durchflußregler, Ventil oder dergleichen ausgebildet sein und wird im Folgenden jeweils als Ventilkörper bezeichnet.

Eine Kaltkanalverteiler der genannten Gattung zum Verarbeiten von wärmehärtbaren Elastomeren, die im Verarbeitungszustand eine spritzbare Viskosität haben, ist aus der DE OS 20 11 653 bekannt. In derartigen Kaltkanalverteilern mit zahlreichen, bis zu 16 oder mehr Einspritzdüsen ist die Länge der Zufuhrkanäle zu den Einspritzdüsen sehr unterschiedlich. Zur genauen Bilanzierung für jede Einspritzdüse ist in jedem Kanal ein als Schraubenkopf ausgebildeter Ventilkörper verstellbar. Die Verstellung ist nur bei geöffnetem Kaltkanalverteiler möglich. Infolgedessen ist die Einstellung und Nachstellung sehr aufwendig.

Die DE OS 21 50 839 beschreibt einen Verteiler für eine Spritzgießmaschine, bei dem in den Kanälen des Verteilers Absperrventile angeordnet sind. Eine Bilanzierung ist damit offenbar nicht möglich.

Aufgabe der Erfindung ist eine solche Ausbildung der Ventilkörper in einem Kaltkanalverteiler, daß dieselben leicht und einzeln einstellbar und zu Wartungszwecken ausbaubar sind.

Diese Aufgabe wird nach der Erfindung dadurch gelöst, daß ein von dem Zufuhrkanal gespeister Kanal in jeder Einspritzdüse radial in eine zylindrische Kammer mündet, daß jede Kammer einen als Drossel dienenden, mit einer in seiner Durchgangsstellung mit dem Kanal fluchtenden Böhrung versehenen, drehbaren Ventilkörper enthält und daß Durchgänge der Verteilerplatte in den jeweiligen Ventilkörper eingreifende Verstellelemente aufnehmen.

Die Erfindung unterscheidet sich insofern vom Stand der Technik, als je ein Ventilkörper für jede Einspritzdüse vorgesehen ist. Damit ist eine gezielte Einstellung und Bilanzierung für jede einzelne Einspritzdüse möglich. Die Verstellung des Ventilkörpers einer Einspritzdüse hat keine Rückwirkungen auf die anderen Einspritzdüsen.

Eine leichte Zugänglichkeit des Ventilkörpers in einer Verteilerplatte wird dadurch erreicht, daß der Kanal quer zur Achse der Einspritzdüse ausgerichtet ist und daß die Kammer den Kanal schneidet.

Eine platzsparende Anordnung des Ventilkörpers wird dadurch erreicht, daß die Kammer koaxial zu dem Einspritzkanal ausgerichtet ist.

Eine abgewnadelte Ausbildung der Zufuhr wird dadurch erzielt, daß der Kanal geneigt zur Achse der Einspritzdüse ausgerichtet ist und daß die Kammer in einer Radialebene der Einspritzdüse angeordnet ist.

Die Zugänglichkeit der zahlreichen Ventilkörper wird dadurch erleichtert, daß in der die Kammer enthaltenden Radialebene symmetrisch zur Kammer eine weitere als Durchgang dienende Öffnung vorgesehen ist.

Ein Austritt des Elastomeren an dem Ventilkörper wird dadurch verhindert, daß der Ventilkörper eine Vielzahl von abdichtenden Ringnuten aufweist.

Der Einbau des Ventilkörpers in die Einspritzdüse wird dadurch sicher möglich, daß der Ventilkörper an einem Stirnende einen Abschlußflansch und dem anderen Stirnende eine Aufnahme für eine Abschlußplatte aufweist.

Eine Verstellung des Ventilkörpers und damit des Durchflusses für jede Einspritzdüse wird dadurch gewährleistet, daß der Ventilkörper in dem Abschlußflansch ein Eingriffsprofil für ein Stellwerkzeug aufweist.

Eine Verstellung der Ventilkörper bei in die Spritzgußmaschine eingebautem Kaltkanalverteiler wird dadurch ermöglicht, daß auf die Kammern Durchgänge in der Verteilerplatte ausgerichtet sind.

Eine besonders feinfühlige Einstellung des Durchflusses wird dadurch erzielt, daß der Ventilkörper als Ringmantel mit einem Querkanal in dem Mantel und mit einem Schneckenrad ausgebildet ist und daß eine in das Schneckenrad eingreifende Schnecke in einem Durchgang der Einspritzdüse drehbar gelagert ist.

Eine Anordnung der Drossel in der Verteilerplatte ist dadurch möglich, daß der Ventilkörper in einer Führungsbuchse drehbar angeordnet ist, wobei die Führungsbuchse auf den Kanal ausgerichtete radiale Kanäle und er Ventilkörper einen entsprechenden Querkanal aufweist.

Das Einsetzen der Führungsbuchse wird dadurch erleichtert, daß die Führungsbuchse durch eine Verdrehsicherung gesichert ist.

Die Einstellung wird dadurch begrenzt, daß der Ventilkörper einen Einstellkopf mit einer Drehbegrenzung aufweist.

Ein Ausfuhrungsbeispiel der Erfindung wird unter Bezugnahme auf die Zeichnungen erläutert, in denen darstellen:
Fig. 1 eine Stirnansicht einer 16-fach Verteilerplatte,
Fig. 2 eine Seitenansicht zu Fig. 2,
Fig. 3 eine Einspritzdüse im Schnitt,
Fig. 4 eine teilweise aufgebrochene Seitenansicht zu Fig. 3,
Fig. 5 eine vergrößerte Ansicht des Ventilkörpers der Drossel,
Fig. 6 eine abgewandelte Einspritzdüse,
Fig. 7 einen Schnitt durch diese Einspritzdüse,
Fig. 8 eine 4-fach Verteilerplatte,
Fig. 9 einen Ausschnitt der Verteilerplatte und
Fig. 10 einen Schnitt nach der Linie X-X in Fig. 9.

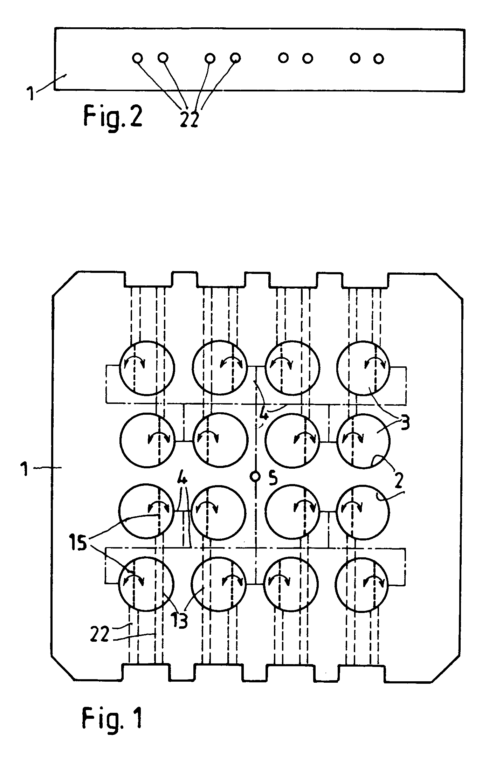

Die Fig. 1 und 2 zeigen eine 16-fach Verteilerplatte 1 eines Kaltkanalverteilers für eine nicht dargestellten Spritzgießmaschine, Die Verteilerplatte 1 hat in vier Reihen 16 Aufnahmen 2 für Einspritzdüsen 3, die schematisch in Fig 1 and um Einzelnen in den Fig. 2 bis 5 dargestellt sind. Innerhalb der Verteilerplatte 1 sind strichpunktiert eingezeichnete Zufuhrkanäle 4 ausgebildet, die an eine Eintrittsmündung 5 für einen nicht dargestellten Einspritzzylinder angeschlossen sind.

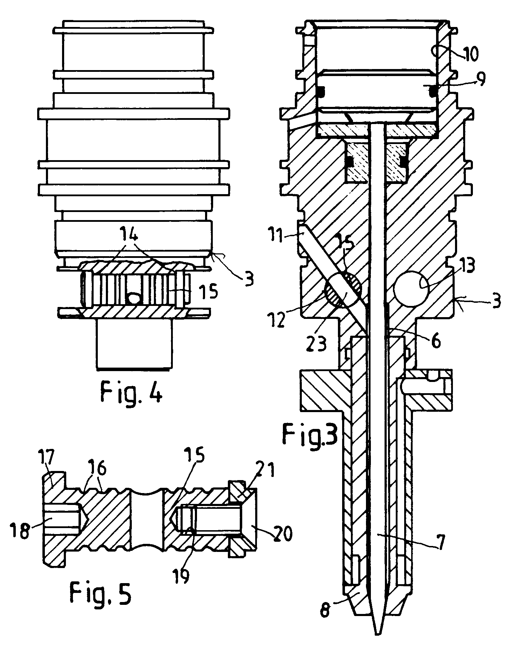

Die Einspritzdüse 3 ist nach den Fig. 3 bis 5 im wesentlichen als Zylinderkörper ausgebildet. Umfangrillen für Dichtungen sind im Einzelnen nicht erläutert. Die Einspritzdüse 3 hat einen zentralen Eintrittskanal 6, der auch eine Düsennadel 7 aufnimmt. Jede Einspritzdüse 3 wird durch eine temperierte Angießbuchse 8 abgeschlossen, die an der Einspritzöffnnung eines Formnests anliegt. Einzelheiten der Isolierung und der Temperierkanäle sind nicht behandelt.. Die Düsennadel 7 sitzt an einem Kolben 9, der in einer Zylinderkammer 10 verschiebbar ist.

In den Düsenkanal 6 mündet geneigt zur Achse der Einspritzdüse 3 ein Kanal 11. Eine zylindrische Kammer 12 schneidet den Kanal 11 und ist senkrecht zu der durch den Kanal 11 gehenden Axialebene der Einspritzdüse 3 ausgerichtet. Innerhalb der durch die Kammer 12 gehenden Radialebene ist symmetrisch zur Achse eine Ausnehmung 13 angeordnet, die jedoch keine Verbindung mit dem Kanal 11 hat und also einen Durchgang darstellt.

Die Kammer 12 ist ein zylindrischer Raum mit Ringstufen 14 an den Stirnenden. Die Kammer 12 nimmt einen Vertilkörper 15 mit einem Querkanal 23 senkrecht zur Achse des Ventilkörpers 15 auf. Durch Drehung des Ventilkorpers 15 wird der freie Querschnitt des Querkanals 23 verändert. Somit dient der Ventilkörper 15 als Drossel.

Der Ventilkörper 15 hat eine Vielzahl von abdichtenden Ringnuten 16, die auch Dichtungen aufnehmen können. An einem Stirnende befindet sich ein Abschlußflansch 17 mit einem vorzugsweise sechskantigen Eingriffsprofil 18. Am anderen Stirnende befindet sich eine Gewindeaufnahme 19 für eine Schraube 20 einer Abschlußplatte 21.

Innerhalb der Verteilerplatte 1 sind Durchgänge 22 ausgebildet, die auf die Kammern 12 und 13 ausgerichtet sind. Die Ventilkörper 15 werden in der aus den Zeichnungen ersichtlichen Weise so eingebaut, daß die Eingriffsprofile 18 durch die Durchgänge 22 hindurch zugänglich sind. Mit Hilfe eines Werkzeugs wie einer Profilstange sind die Eingriffsprofile 18 zugänglich und einstellbar. Diese Einstellung ist jederzeit im Betrieb der Spritzgußmaschine möglich, ohne daß die Verteilerplatte 1 ausgebaut werden müßte. Die Einstellung kann auch mechanisiert und automatisiert werden.

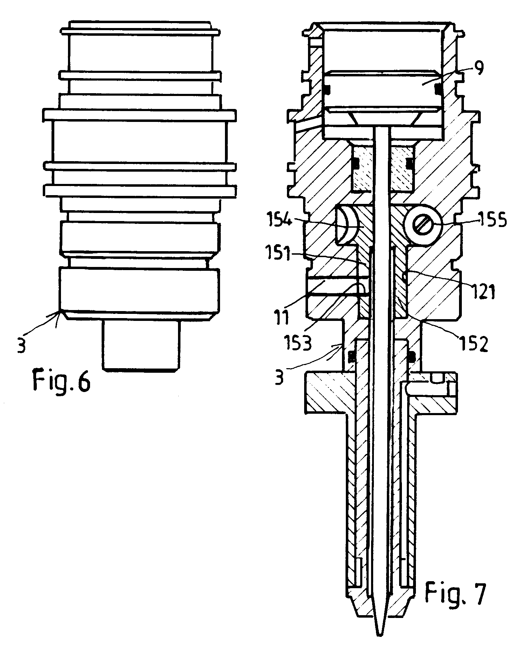

Die Fig. 6 und 7 zeigen ein abgewandeltes Ausführungsbeispiel der Einspritzdüse 3. Die an den Kanal 11 anschließende Kammer 121 ist koaxial zum Dusenkanal 6 ausgerichtet. Der Ventilkörper 151 ist als Ringmantel 152 mit einem Querkanal 153 ausgebildet. Der Ventilkörper 151 stellt einen Ringschieber dar. An dem Ventilkörper 151 sitzt in axialer Richtung ein Schneckenrad 154, in das eine Schnecke 155 eingreift, die in einem Durchgang der Einspritzdüse 3 drehbar gelagert ist. Dieser Schneckentrieb ermöglicht eine sehr feinfühlige Einstellung des Durchflusses durch den Ventilkörper 151.

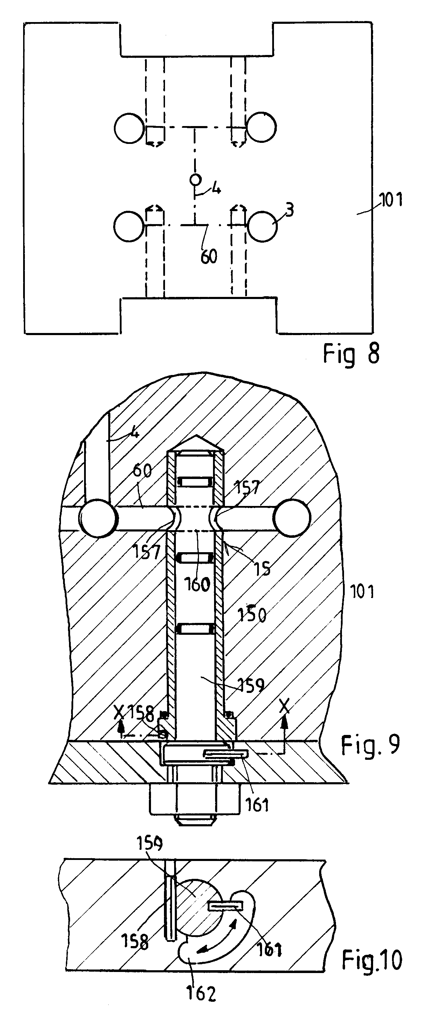

Die Fig. 8 bis 10 zeigen ein weiteres Ausführungsbeispiel einer Verteilerplatte 101 eines Vierfachwerkzeugs. An den Zufuhrkanal 4 schließen Eintrittkanäle 60 an, die in die schematisch dargestellten Einspritzdüsen 3 führen. Das Ventil 15 ist in den Eintrittkanal 60 eingefügt. Das Ventil 15 umfaßt eine Führungsbuchse 156 mit radialen Kanälen 157. Die Führungsbuchse 156 ist mit einer Verdrehsicherung 158 in die Verteilerplatte 1 eingebaut. Innerhalb der Führungsbuchse 156 befindet befindet sich ein Ventilkörper 159 mit einem Querkanal 160. Der Ventilkörper 159 ist als Zapfen ausgebildet. Ein Stift 161 ragt in einen Schlitz 162 und begrenzt so die Drehung des Ventilkörpers 159 auf einen Bereich von etwa 90°.

## Patentansprüche

1. Kaltkanalverteiler für ein Spritzgießwerkzeug mit mehreren jeweils einem Formnest zugeordneten Einspritzdüsen und mit innerhalb der Verteilerplatte zu den einzelnen Einspritzdüsen führenden Zufuhrkanälen, wobei jedem Zufuhrkanal eine Drossel zugeordnet ist und wobei ein von dem Zufuhrkanal (4) gespeister Kanal (11) in jeder Einspritzdüse (3) radial in eine zylindrische Kammer (12, 121) mündet, jede Kammer (12) einen als Drossel dienenden, mit einer in seiner Durchsgangsstellung mit dem Kanal (11) fluchtenden Bohrung (23) versehenen, drehbaren Ventilkörper (15, 151) enthält und wobei Durchgänge (22) der Verteilerplatte (1) in den jeweiligen Ventilkörper (9) eingreifende Verstellelemente (15) aufnehmen.

2. Kaltkanalverteiler nach Anspruch 1, dadurch gekennzeichnet, daß der Kanal (11) quer zur Achse der Einspritzdüse (3) ausgerichtet ist und daß die Kammer (12) den Kanal (11) schneidet.

3. Kaltkanalverteiler nach Anspruch 2, dadurch gekennzeichnet, daß die Kammer (121) koaxial zu dem Einspritzkanal (6) ausgerichtet ist.

4. Kaltkanalverteiler nach Anspruch 2, dadurch gekennzeichnet, daß der Kanal (11) geneigt zur Achse der Einspritzdüse ausgerichtet ist und daß die Kammer (12) in einer Radialebene der Einspritzdüse (3) angeordnet ist.

5. Kaltkanalverteiler nach Anspruch 1 oder 2, dadurch gekennzeichnet, daß in der die Kammer (12) enthaltenden Radialebene symmetrisch zur Kammer (12) eine weitere als Durchgang dienende Öffnung (13) vorgesehen ist.

6. Kaltkanalverteiler nach Anspruch 4 oder 5, dadurch gekennzeichnet, daß der Ventilkörper (15) eine Vielzahl von abdichtenden Ringnuten (16) aufweist.

7. Kaltkanalverteiler nach Anspruch 6, dadurch gekennzeichnet, daß der Ventilkörper (15) an einem Stirnende einen Abschlußflansch (17) und an dem anderen Stirnende eine Aufnahme (19) für eine Abschlußplatte (21) aufweist.

8. Kaltkanalverteiler nach Anspruch 7, dadurch gekennzeichnet, daß der Ventilkörper (15) in dem Abschlußflansch (17) ein Eingriffsprofil (18) für ein Stellwerkzeug aufweist.

9. Kaltkanalverteiler nach einem der Ansprüche 4 bis 8, dadurch gekennzeichnet, daß auf die Kammern (12, 13) Durchgänge (22) in der Verteilerplatte ausgerichtet sind.

10. Kaltkanalverteiler nach einem der Ansprüche 1 bis 3, dadurch gekennzeichnet, daß der Ventilkörper (151) als Ringmantel (152) mit einem Querkanal (153) in dem Mantel und mit einem Schneckenrad (154) ausgebildet ist und daß eine in das Schneckenrad (154) eingreifende Schnecke (155) in einem Durchgang (12, 13) der Einspritzdüse (3) drehbar gelagert ist.

11. Kaltkanalverteiler nach einem der Ansprüche 1 bis 3, dadurch gekennzeichnet, daß der Ventilkörper (159) in einer Führungsbuchse (156) drehbar angeordnet ist, wobei die Führungsbuchse auf den Eintrittkanal (60) ausgerichtete radiale Kanäle (157) und der Ventilkörper (159) einen entsprechenden Querkanal (160) aufweist.

12. Kaltkanalverteiler nach Anspruch 11, dadurch gekennzeichnet, daß die Führungsbuchse (156) durch eine Verdrehsicherung (158) gesichert ist.

13. Kaltkanalverteiler nach Anspruch 11 oder 2, dadurch gekennzeichnet, daß der Ventilkörper (159) einen Einstellkopf mit einem Stift (161) zur Drehbegrenzung aufweist.
